# EUROPEAN PATENT SPECIFICATION

(11) **EP 2 629 397 B1**
(45) Date of publication and mention of the grant of the patent: **18.05.2016**
(21) Application number: 12425031.7
(22) Date of filing: 14.02.2012
(51) Int. Cl.: H02J 7/14, H02J 7/00, H02H 7/18

(54) **Method for recharging the batteries of a DC generating unit to supply isolated electrical loads and corresponding device for implementing the method**
Verfahren zum Wiederaufladen von Batterien einer DC Generatoreneinheit um isolierte elektrische Lasten zu versorgen und korrespondierendes Gerät um das Verfahren zu implementieren
Procédé pour charger les batteries d'un générateur DC pour délivrer des charges électriques isolées, et système correspondant pour la mise en oeuvre du procédé

(43) Date of publication of application: 21.08.2013
(73) Proprietor: Ascot S.R.L., 93012 Gela (CL) (IT)
(72) Inventor: Greca, Luigi, 93012 Gela (CL) (IT); Fasciana, Gaetano, 93012 Gela (CL) (IT)
(74) Representative: Botti, Mario

(56) References cited:
- US-A- 5 015 918
- US-A1- 2002 109 952
- US-B1- 6 392 387

## Description

### Field of application

The present invention refers in its most general aspect to a method for recharging the batteries of a DC generating unit for supplying isolated electrical loads.

The invention also concerns a device for implementing the aforementioned method.

The invention concerns in particular, but not exclusively, a method for recharging batteries associated with an integrated station for supplying electric power in DC current to geographically isolated electrical loads. The integrated station comprises a DC generating unit with a current generator driven by an internal combustion engine.

### Prior art

As it is well known, specifically in the technical field of the DC generating units intended to supply electrical loads situated in remote or isolated geographical areas there is a primary need of saving as much fuel as possible so as to reduce the operative costs of the DC generating unit.

Associated to this primary requirement there is a further requirement of minimising maintenance interventions on the DC generating unit, without shortening but rather lengthening the useful life of the DC generating unit itself.

The state of the art already offers a solution to these combined requirements described in patent application n° EP 2 323 239 A1 to the same Applicant and published on 181512011.

The described solution in such an application is that of providing a "hybrid" type of apparatus, that is i.e. capable of supplying an electrical load through DC current delivered by a group of batteries associated with the supply station and of exploiting the generating unit incorporated in the station itself to periodically charge the group of batteries, but still making the internal combustion engine, which drives the generator of the DC unit to operate in an optimal manner.

In such a way the operation costs are dramatically reduced for the same service obtained, that is to say for energy or electric power delivered, and the useful life of the DC generating unit incorporated in the station itself is greatly lengthened.

The operating voltage delivered by this hybrid unit can vary in a range of between 47 and 58 Volt.

Although it is advantageous from various points of view, and substantially meeting its purposes, this solution has a limitation that is illustrated hereafter.

Normally, the specifications foresee that during the recharging step, the batteries are subjected to a supply voltage that can go up to about 10% more than the maximum nominal voltage delivered to the load, for example a voltage that can reach 63 Volts.

This makes it possible to charge the batteries in an optimal manner and up to 100% of their capability, which can also reduce the frequency of recharging.

However, this overvoltage can cause problems for the electrical load which suffers supply voltages that exceed the nominal value of 58 Volt.

Over a long time this difference between the recharging voltage and the maximum operative nominal voltage can lead to serious drawbacks for the load and can even compromise the power supply continuity.

US 2002/109952 A1 (cf. the preamble of claims 1 and 5) discloses a method for recharging the battery or batteries of a DC generating unit for supplying at least one isolated electric load, wherein the batteries are associated to an integrated electric power station incorporating the DC generating unit with a corresponding generator for supplying DC electric power to the electrical load, wherein it is foreseen the removable insertion in series to the load of a voltage limiting device, just during the charging step of the batteries. However, this solution is provided to protect the electric system of a motor vehicle from over-voltages.

US 6 392 387 B1 discloses a method similar to the one disclosed in US 2002/109952 A1.

US 5 015 918 A discloses a device for recharging the battery or batteries of a DC generating unit for supplying at least one isolated electric load, wherein the batteries are associated to an integrated electric power station incorporating the DC generating unit with a corresponding generator for supplying DC electric power to the electrical load, wherein the device foresees a power supply line between the generator and the load on which power supply line a parallel circuit between a voltage limiting device and a by-pass switch normally closed is inserted in series to the load. This solution is used as a current limiter to preserve the life of the batteries.

The technical problem forming the basis of the present invention is that of devising a method for recharging the batteries of a DC generating unit, in particular a DC generating unit that is incorporated in a hybrid station for supplying isolated electrical loads, such a method having functional characteristics such as to ensure the absolute continuity between the power supply provided by the motor and by the batteries to a sensitive load.

Another purpose of the present invention is that of providing a protection for the sensitive electrical load while batteries are being recharged.

A further purpose of the present invention is that of making the DC generating unit of the integrated supply station work always at its best, reducing the consumption of fuel and the requirement of periodic maintenance.

### Summary of the invention

The idea behind the present invention is that of foreseeing an overvoltage protection while charging the batteries by inserting in a removable manner a voltage limiter in series with the load when a current or a voltage is detected as an indicator of the need to recharge said batteries.

In accordance with the aforementioned solution idea the technical problem is solved with a method according to claim 1.

The insertion of the voltage limiting device occurs automatically when a predetermined current absorption threshold has been exceeded by the batteries, indicative of the need to recharge.

The voltage limiting device can be a series of diodes or a bridge of diodes and the automatic insertion occurs through the opening of a by-pass switch on a supply line between the generator and the load.

Basically, the voltage limiting device is in parallel with said switch.

For such a purpose it is foreseen an electronic control unit that is incorporated in said station and that is suitable for regulating the charge of said batteries actuating an internal combustion engine of said generator to a number of revs that can vary according to the charge curves of the batteries and to the load demand.

Advantageously, the recharging step occurs by applying a voltage that is at least 10% higher than the maximum operative nominal voltage supplied to the load, to the batteries.

The invention moreover concerns a device for recharging the battery or batteries of a DC current generating unit according to claim 5. The voltage limiting device can be a series of diodes, a bridge of diodes but also a variable resistor.

The characteristics and advantages of the method and of the device according to the invention shall become clearer from the description, given hereafter, of a specific embodiment thereof given as an indication and not for limiting purposes with reference to the attached drawings.

### Brief description of the drawings

Figure 1 represents a schematic and partial view, in functional blocks, of an integrated station for supplying electric power to isolated electrical loads in DC current and incorporating a DC generator or generating unit as well as being provided with a group of batteries;
Figure 2 represents a schematic and partial view of the integrated station of figure 1 in a different operating condition, and in particular in the condition for recharging batteries.

### Detailed description

With reference to such schematic figures, reference numeral 1 partially and schematically indicates the architecture of an integrated station for supplying electric power in DC current to sensitive electrical loads, for example electrical loads that are geographically remote with respect to an electric distribution network. More in particular, the figure is a diagram of the architecture of the electrical connections of the various components of the station 1.

The electrical load should be considered outside from the station 1 and it is schematically shown with reference numeral 20.

The integrated station 1 comprises an apparatus equipped with a DC generating unit 2 which includes a DC generator 4 and that is driven by an internal combustion engine, which is not represented in the figures since it is conventional.

Advantageously, the generator 4 incorporated in the DC unit of the station 1 comprises only an alternator and a relative rectifier; since the regulation of the DC at the level required by the apparatus, for example at 48V, is carried out upstream of the rectifier upon the excitation of the alternator so as to have the voltage in alternating current always suitable for ensuring the correct direct voltage value in output in every instantaneous load condition. In other words, the generator 4 does not have a final regulating or conversion stage.

The alternator of the generator 4 is driven by the internal combustion engine, for example, a diesel engine conventionally fuelled with naphtha or diesel fuel.

The integrated station 1 is advantageously associated with at least one group of batteries 15 which can possibly be housed on board of the structure, but this is not strictly necessary. Indeed there are already solutions in which the group of batteries 15 is already available to the apparatus and is external or in any case structurally independent with respect to the station 1.

The single batteries of the group 15 can be electrically connected in series or in parallel, according to the power supply requirements of the load in DC. Preferably, the batteries are lead acid rechargeable batteries, without this imposing any limitation however to the rights of the Applicant.

The integrated station 1 comprises an electronic control unit 10 that is interconnected with the various components and supervises and regulates both the operation of the engine, and the charging and discharging steps of the group of batteries 15. The electronic unit 10 carries out other functions of controlling the entire station 1.

The electronic control unit 10 has a plurality of signal inputs receiving electrical pulses from various sensors of the integrated structure 1.

Moreover, the same unit 10 has a plurality of control outputs that are connected to various devices for actuating the structure 1 as shall become clearer from the rest of the description.

Advantageously, the internal combustion engine is an engine with continuously variable speed. More in particular, the work speed of the engine is regulated, in every load condition, so as to be that of maximum efficiency of the engine itself for that load condition.

The engine can vary the operative revs controlled and commanded by the electronic unit 10 so as to substantially operate around a speed of maximum torque or of maximum efficiency according to the supply requirements of the load. For this purpose the electronic unit 10 detects through the sensors the number of revs of the engine and the absorption of current or the voltage of the battery group 15 regulating the supply of fuel to the engine so as to vary the number of revs according to the recharging needs.

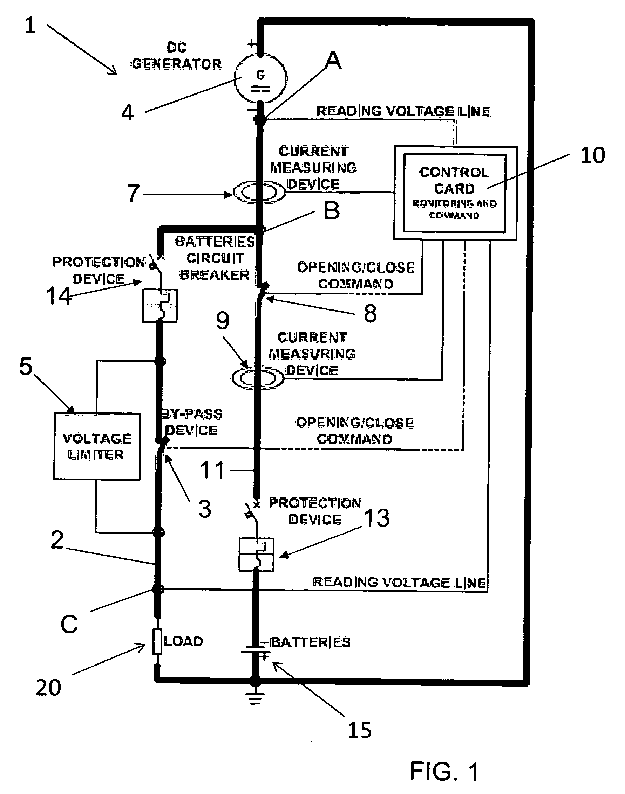

Figure 1 shows for example a first current sensor 7 connected to an input of the electronic unit 10. A further input of the unit 10 collects a voltage signal in a node A at the generator 4.

Advantageously, a second current sensor 9 is inserted on a supply line 11 between the generator 4 and the batteries 15. Also this current sensor is connected to a corresponding input of the unit 10.

On the line 11 a device 13 for protecting from overcurrent is foreseen between the second current sensor 11 and the batteries 15.

Moreover, between the first 7 and the second current sensor 9 a switch 8 is inserted, that is to say a commanded switch slaved to an output of the control unit 10.

In figure 1 the bold line or with greater thickness represents the line of electric power which is involved by the passage of electric current in the operative conditions illustrated in figure 1 and that correspond to a normal supply of the load and of the batteries, but not to the specific step of recharging the batteries.

Advantageously, according to the invention, in the architecture of the electric connections of the station 1 a voltage limiter 5 is foreseen inserted between a circuit node B between the first current sensor 7 and the switch 8 and a further node C of connection to the load 20.

This node C is also connected to a relative input of the control unit 10 to make it possible to detect the voltage signal in the node itself.

Substantially, there is a line 2 for supplying electric power which is in parallel to the connection line 11 between the generator 4 and the batteries 15. On such a line 2 a device 14 is also inserted for protecting from overcurrent arranged between the node B and the voltage limiter 5.

Moreover, the voltage limiter 5 is connected on the line 2 in parallel to a by-pass switch 3, normally closed, slaved to an output of the control unit 10 and suitable for short circuiting the voltage limiter 5 and for excluding it in the normal operation of supply to the load 20. The switch 3 is opened on command by the unit 10 only while the batteries 15 are charging.

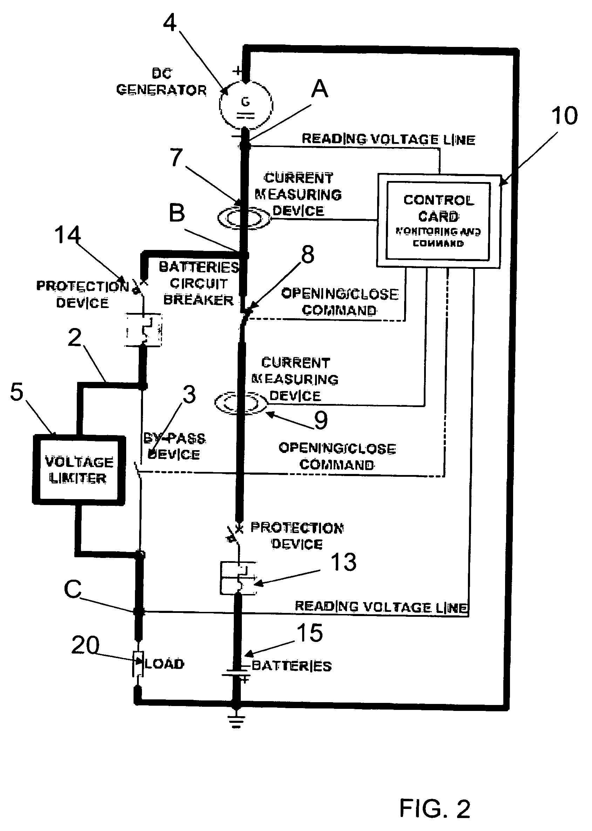

In particular, the opening intervention of the by-pass switch 3 is shown in figure 2 which highlights the supply line 2 which passes through the voltage limiter 5.

It is worth noting that the voltage limiter 5 can be made with a series of diodes which are made to operate in conduction and not in interdiction. Alternatively, a bridge of diodes can be used.

In any case other alternative embodiments are possible; for example, through a series of transistor or through a DC/DC converter.

Also the use of a variable resistor can be foreseen.

A series of simple resistors would not however be an optimal choice due to their high consumption and to their lack of precision.

All these alternatives are not illustrated in the drawings since their indication is sufficient to enable a man skilled in the art to make an alternative embodiment.

Figure 2 shows all the same components of figure 1 but shows a different operation condition in which the recharging of the batteries 15 is carried out, whilst still supplying the load 20.

According to the method of the present invention, during the step of recharging batteries 15 it is foreseen for there to be the automatic opening of the by-pass switch 3 on the supply line 2. The opening of the switch 3 depends on the detection of a predetermined threshold of current absorbed by the batteries 15 which indicate the need of a recharging step.

With the opening of the switch 3 the load current is capable of passing through the voltage limiter 15 and of lowering in such a way the voltage value on the node C at one end of the load 20.

The other supply line 11 connected to the batteries 15 however remains at a level of recharging voltage that is greater than the nominal voltage value supplied to the load, said nominal voltage normally being of between 47 and 58 Volts.

The recharging voltage is selected with a value of overvoltage of about 10% greater with respect to the maximum voltage value applied to the load supplied in DC, for example the recharging voltage can reach 63 Volts. In such a way it is ensured for there to be in a relatively short time a 100% recharging of the batteries 15.

Advantageously, however, the voltage limiter 5 intervenes precisely in the recharging step so as to maintain a strong supply on the load ensuring however on the node C a potential that is below or equal to the value of maximum nominal voltage, for example of 58 Volts.

The voltage limiter 5 thus cuts down the overvoltage produced by the generator 4 during the recharging so as to retain on it the delta voltage between the maximum nominal voltage value and the recharging voltage.

The electronic control unit 10 supervises the operations of recharging batteries in a completely automatic manner starting this recharge according to current and voltage values that are constantly monitored downstream of the generator, upstream of the batteries and on the load through the various sensors 7, 9 and the voltage values on nodes A and C.

When the group of batteries 15 absorbs the maximum recharge current also the engine of the DC generating unit can be made to operate at the optimal speed dispensing the maximum electric power.

On the other hand, when the group of batteries 15 has reached the maximum charge, the engine can be made to operate at a rotation speed that is lower thus obtaining a saving in fuel consumption.

The generator 4 of the DC unit generates in output an electric power that directly supplies the group of batteries 15 through the commanded switch 8 and the automatic protection device that protects the DC unit against possible short circuiting of the batteries 15.

In accordance with the method of the present invention, the electronic control unit 10 periodically activates the generator 4 of the DC unit to charge the batteries 15.

This periodical recharge can occur at predetermined time intervals, for example every six hours, alternated or at intervals with time periods in which the group of batteries 15 directly supplies the load 20 of the apparatus in DC without being recharged by the DC unit 2.

Preferably, the discharge period has been selected so that the residual load of the batteries is of at least 50%, so as to both promote the recharging step, and to avoid excessive discharges of the group of batteries 15 which reduce their useful life.

It should be noted however that the maintaining of a residual charge equal to at least 50% of the accumulation capability of the group of batteries 15 also makes it possible to confer to the integrated station 1 the capability of supporting the supply to the load for a predetermined time. Therefore, even in the case in which there is a serious failure of the generator which requires the intervention of maintenance workers, the load remains supplied for a period of time that is sufficient to arrange the intervention.

The electronic unit 10 does not only regulate in a time controlled manner the charge and discharge cycle of the group of batteries, but it is also capable of interrupting the charge when a charge level is detected that is more than suitable for the purposes of supplying the load. Therefore the recharge or its interruption occurs both on a time controlled basis and on a consent signal detected by means of sensors of the charge level or of current absorption by the group of batteries 15.

The method and the device according to the present invention effectively solve the technical problem and achieve numerous advantages.

Firstly, the recharging of the batteries 15 occurs in optimal conditions ensuring an effective 100% recharge in a relatively short time. At the same time, the load is constantly kept supplied with a maximum potential applied at its ends which does not exceed the maximum nominal voltage applied to it.

Moreover, with the method of the present invention the consumption of fuel for the same energy delivered to the load with respect to the use of a normal DC unit is reduced drastically, even up to 50%.

Furthermore, the engine of the DC unit operates nearly always at maximum torque speed and this makes it possible to double its useful life.

## Claims

1. Method for recharging the battery or batteries (15) of a DC generating unit for supplying at least one isolated electrical load (20) and wherein the batteries are associated to an integrated electric power station incorporating the DC generating unit with a corresponding generator (4) for supplying DC electric power to the electrical load (20), **characterised in that** it foresees the removable insertion in series to the load (20) of a voltage limiting device (5) just during the charging step of the batteries (15);
the insertion of the voltage limiting device (5) occurs automatically, through a by-pass switch (3), normally closed, connected in parallel to the voltage limiting devise (5), when a predetermined current absorption threshold has been exceeded by the batteries (15), indicating the need to be recharged.

2. Method according to claim 1, **characterised in that** said voltage limiting device (5) is a series of diodes or a bridge of diodes and that the automatic insertion occurs through the opening of said by-pass switch (3) on a supply line (2) between the generator (4) and the load (20).

3. Method according to claim 1, **characterised in that** an electronic control unit (10) incorporated in said station is suitable for regulating the charge of said batteries (15) by actuating an internal combustion engine of said generator (4) to a variable number of engine revolutions according to the charge curve of the batteries and to the request of said load (20).

4. Method according to claim 1, **characterised in that** the recharging step occurs by applying, to the batteries, a voltage that is at least 10% greater than the maximum operative nominal voltage supplied to the load (20).

5. Device for recharging the battery or batteries (15) of a DC generating unit for supplying at least an isolated electrical load (20), wherein the batteries are associated to an integrated electric power station incorporating the DC generating unit with a corresponding generator (4) for supplying electric power to the electrical load (20), wherein the device foresees a power supply line (2) between the generator (4) and the load, **characterised in that** on said power supply line a parallel circuit between a voltage limiting device (5) and a by-pass switch (3), normally closed, is inserted in series to the load (20) and is closed when the battery are not in the recharging step, and **in that** said device further comprises an electronic control unit (10) having input signals that are connected to current (7, 9) and/or voltage (A, C) sensors of the generator (4), of the batteries (15) and of the load (20) and including control outputs for driving the opening of said by-pass switch (3) at the starting of the recharging step of the batteries.

6. Device according to claim 5, **characterised in that** said voltage limiting device (5) is a series of diodes or a bridge of diodes and that the opening of said switch (3) occurs automatically when a predetermined current absorption threshold has been exceeded by the batteries (15), indicative of the need to be recharged.

7. Device according to claim 5, **characterised in that** said voltage limiting device (5) is a variable resistor.

8. Device according to claim 5, **characterised in that** the recharging steps occur by applying, to the batteries (15), a voltage that is at least 10% greater than the maximum operative nominal voltage supplied to the load (20).

## Patentansprüche

1. Verfahren zum Aufladen der Batterie oder Batterien (15) einer DC-Erzeugungseinheit zum Versorgen von zumindest eines isolierten elektrischen Verbrauchers (20) und wobei die Batterien zu einem integrierten Elektrizitätswerk verbunden sind, welches die DC-Erzeugungseinheit mit einem zugehörigen Generator (4) zum Versorgen des elektrischen Verbrauchers (20) der DC elektrischen Leistung beinhaltet,
**dadurch gekennzeichnet, dass**
es die trennbare Einbringung in Reihe zu der Ladung (20) einer Spannungsbegrenzungsvorrichtung (5) lediglich während des Ladeschritts der Batterien (15) vorhersieht;
das Einbringen der Spannungsbegrenzungsvorrichtung (5) durch einen Überbrückungsschalter (3) automatisch geschieht, welcher normalerweise geschlossen ist, welcher parallel zu der Spannungsbegrenzungsvorrichtung (5) verbunden ist, wenn ein voreingestellter Stromabsorptionsschwellenwert, welcher die Notwendigkeit zum Aufladen anzeigt, durch die Batterien (15) überschritten wurde.

2. Verfahren nach Anspruch 1,
**dadurch gekennzeichnet, dass**
die Spannungsbegrenzungsvorrichtung (5) eine Reihe von Dioden oder eine Brücke von Dioden ist und dass das automatische Einbringen durch das Öffnen des Überbrückungsschalters (3) an einer Versorgungsleitung (2) zwischen dem Generator (4) und dem Verbraucher (20) geschieht.

3. Verfahren nach Anspruch 1,
**dadurch gekennzeichnet, dass**
eine elektronische Steuereinheit (10), welche in der Station eingebaut ist, geeignet ist, die Ladung der Batterien (15) durch Ingangsetzen eines internen Verbrennungsmotors des Generators (4) zu einer variablen Anzahl von Motorumdrehungen gemäß der Ladungskurve der Batterien und der Anfrage des Verbrauchers (20) zu regulieren.

4. Verfahren nach Anspruch 1,
**dadurch gekennzeichnet, dass**
der Aufladungsschritt durch Anlegen einer Spannung an die Batterien auftritt, wobei die Spannung zumindest 10 % größer ist als die maximale operative Nominalspannung, welche dem Verbraucher (20) bereitgestellt wird.

5. Vorrichtung zum Aufladen der Batterie oder Batterien (15) einer DC-Erzeugungseinheit zum Versorgen zumindest eines isolierten elektrischen Verbrauchers (20), wobei die Batterien zu einem integrierten Elektrizitätswerk verbunden sind, welches die DC-Erzeugungseinheit mit einem zugehörigen Generator (4) zum Versorgen des elektrischen Verbrauchers (20) mit elektrischer Energie beinhaltet, wobei die Vorrichtung eine Energieversorgungsleitung (2) zwischen dem Generator (4) und der Ladung vorhersieht,
**dadurch gekennzeichnet, dass**
an der Energieversorgungsleitung ein paralleler Schaltkreis zwischen einer Spannungsbegrenzungsvorrichtung (5) und einem Überbrückungsschalter (3), welcher normalerweise geschlossen ist, in Reihe zu dem Verbraucher (20) eingebracht ist und geschlossen ist, wenn die Batterie sich nicht in dem Aufladeschritt befindet und dass die Vorrichtung weiter eine elektronische Steuereinheit (10) umfasst, welche Eingangssignale aufweist, welche mit Strom- (7,9) und/oder Spannungssensoren (A, C) des Generators (4), der Batterien (15) und der Ladung (20) verbunden sind und Steuerungsausgänge zum Veranlassen des Öffnens des Überbrückungsschalters (3) beim Beginn des Aufladeschritts der Batterien beinhaltet.

6. Vorrichtung nach Anspruch 5,
**dadurch gekennzeichnet, dass**
die Spannungsbegrenzungsvorrichtung (5) eine Reihe von Dioden oder eine Brücke von Dioden ist und dass das Öffnen des Schalters (3) automatisch geschieht, wenn ein vorgegebener Stromabsorptionsschwellenwert, welcher die Notwendigkeit der Aufladung anzeigt, durch die Batterien (15) überschritten wurde.

7. Vorrichtung nach Anspruch 5,
**dadurch gekennzeichnet, dass**
die Spannungsbegrenzungsvorrichtung (5) ein variabler Widerstand ist.

8. Vorrichtung nach Anspruch 5,
**dadurch gekennzeichnet, dass**
die Aufladungsschritte durch Anlegen einer Spannung an die Batterien (15) auftreten, wobei die Spannung zumindest 10 % größer ist als die maximale operative Nominalspannung, welche dem Verbraucher (20) bereitgestellt wird.

## Revendications

1. Méthode pour recharger la batterie ou les batteries (15) d'une unité génératrice de courant continu afin d'alimenter au moins une charge électrique isolée (20) et dans laquelle les batteries sont associées à une centrale électrique intégrée incorporant l'unité génératrice de courant continu avec un générateur correspondant (4) afin d'alimenter en courant électrique continu la charge électrique (20), **caractérisée en ce qu'**elle prévoit une insertion amovible en série avec la charge (20) d'un dispositif limiteur de tension (5) seulement pendant l'étape de chargement des batteries (15) ;
l'insertion du dispositif limiteur de tension (5) se produit automatiquement, par l'intermédiaire d'un interrupteur de dérivation (3), généralement fermé, connecté en parallèle au dispositif limiteur de tension (5), quand un seuil prédéterminé d'absorption de courant a été dépassé par les batteries (15), indiquant le besoin d'être rechargées.

2. Méthode selon la revendication 1, **caractérisée en ce que** ledit dispositif limiteur de tension (5) est une série de diodes ou un pont de diodes et **en ce que** l'insertion automatique se produit par l'ouverture dudit interrupteur de dérivation (3) sur une ligne d'alimentation (2) entre le générateur (4) et la charge (20).

3. Méthode selon la revendication 1, **caractérisée en ce que** une unité de commande électronique (10) incorporée dans ladite centrale est adaptée à réguler la charge desdites batteries (15) en actionnant un moteur à combustion interne dudit générateur (4) à un nombre variable de tours moteur selon la courbe de charge des batteries et selon la demande de ladite charge (20).

4. Méthode selon la revendication 1, **caractérisée en ce que** l'étape de recharge se produit en appliquant, aux batteries, une tension qui est au moins 10% supérieure à la tension nominale maximum de fonctionnement appliquée à la charge (20).

5. Dispositif pour recharger la batterie ou les batteries (15) d'une unité génératrice de courant continu pour alimenter au moins une charge électrique isolée (20), dans laquelle les batteries sont associées à une centrale électrique intégrée incorporant l'unité génératrice de courant continu avec un générateur correspondant (4) afin d'alimenter en énergie électrique la charge électrique (20), dans laquelle le dispositif prévoit une ligne d'alimentation (2) entre le générateur (4) et la charge,
**caractérisé en ce que** sur ladite ligne d'alimentation, un circuit en parallèle entre un dispositif limiteur de tension (5) et un interrupteur de dérivation (3), généralement fermé, est inséré en série avec la charge (20) et est fermé lorsque la batterie n'est pas dans l'étape de recharge,
et **en ce que** ledit dispositif comprend également une unité de commande électronique (10) comportant des signaux d'entrée connectés à des capteurs de courant (7, 9), et/ou à des capteurs de tension (A, C) du générateur (4), des batteries (15) et de la charge (20) et comprenant des sorties de commande pour commander l'ouverture dudit interrupteur de dérivation (3) au début de l'étape de recharge des batteries.

6. Dispositif selon la revendication 5, **caractérisé en ce que** ledit dispositif limiteur de tension (5) est une série de diodes ou un pont de diodes et **en ce que** l'ouverture dudit interrupteur de dérivation (3) se produit automatiquement quand un seuil prédéterminé d'absorption de courant a été dépassé par les batteries (15), indiquant le besoin d'être rechargées.

7. Dispositif selon la revendication 5, **caractérisé en ce que** ledit dispositif limiteur de tension (5) est une résistance variable.

8. Dispositif selon la revendication 5, **caractérisé en ce que** les étapes de recharge se produisent en appliquant, aux batteries (15), une tension qui est au moins 10% supérieure à la tension nominale maximum de fonctionnement appliquée à la charge (20).
